Europäisches Patentamt

European Patent Office

Office européen des brevets

(19)

(11) Publication number: **0 276 519 B1**

# EUROPEAN PATENT SPECIFICATION

(45) Date of publication of patent specification: **02.05.91**  (51) Int. Cl.⁵: **C09K 11/80, H01J 29/20**

(21) Application number: **87202648.9**

(22) Date of filing: **30.12.87**

(54) Luminescent lanthanum gallate activated by trivalent thulium, luminescent screen provided with such a gallate and cathode ray tube provided with such a screen.

(30) Priority: **19.01.87 NL 8700109**

(43) Date of publication of application:
**03.08.88 Bulletin 88/31**

(45) Publication of the grant of the patent:
**02.05.91 Bulletin 91/18**

(84) Designated Contracting States:
**AT BE CH DE FR GB IT LI NL SE**

(56) References cited:
**EP-A- 0 142 931**
**EP-A- 0 209 942**

(73) Proprietor: **N.V. Philips' Gloeilampenfabrieken**
**Groenewoudseweg 1**
**NL-5621 BA Eindhoven(NL)**

(72) Inventor: **Mutsaers, Cornelis Adrianus H. A.**
**c/o INT. OCTROOIBUREAU B.V. Prof. Holst-**
**laan 6**
**NL-5656 AA Eindhoven(NL)**
Inventor: **de Leeuw, Dagobert Michel**
**c/o INT. OCTROOIBUREAU B.V. Prof. Holst-**
**laan 6**
**NL-5656 AA Eindhoven(NL)**

(74) Representative: **Evers, Johannes Hubertus**
**Marie et al**
**INTERNATIONAAL OCTROOIBUREAU B.V**
**Prof. Holstlaan 6**
**NL-5656 AA Eindhoven(NL)**

## Description

The invention relates to a luminescent lanthanum gallate having the perovskite structure and activated by trivalent thulium. The invention also relates to a luminescent screen provided with such a luminescent lanthanum gallate and to a cathode ray tube provided with such a luminescent screen.

Luminescent lanthanum gallates whose fundamental lattice is defined by the formula $LaGaO_3$ and which have the crystal structure of perovskite are known from the published Japanese Patent Application Kok. 71-31843. In these known gallates rare earth metals are used as activators. The lanthanum gallate activated by trivalent thulium exhibits line emission in the blue part of the spectrum at approximately 460 nm. The Application states that these blue-luminescing gallates may be used in cathode ray tubes for the display of pictures, notably colour pictures.

Generally three luminescent materials to form the picture from the three primary colours red, green and blue are used in colour picture display tubes, whose picture is directly observed (so-called direct-vision tubes). For the blue component a luminescent silver-activated zinc sulphide is generally used which has a very high efficiency upon electron excitation. A great drawback of these luminescent sulphides is, however, that they exhibit a strong saturation. This means that the efficiency rapidly decreases with an increasing screen load (increasing power of the exciting electron beam) and has the said high value only at comparatively low values of the screen load.

For different applications, for example in tubes used at very high levels of ambient illumination and also in tubes for projection television, cathode ray tubes are to be available with a luminescent screen which can be loaded to a much higher extent (for example by a factor of 10 or more) than in the case of the conventional direct-vision tubes, so that very bright pictures can be obtained. In a projection television tube a very bright picture is formed on a luminescent screen having a comparatively small surface area, which picture is magnified many times and projected on a viewing screen. Since the blue-luminescing Ag-activated Zns is less suitable for projection television due to its strong saturation, there is a general search for substitute materials. Such a substitute material must comply with a large number of requirements. In the first place the luminous efficiency (the luminous flux per W excitation energy in 1m/W) should of course be high and the colour point of the emitted radiation should be suitable for the envisaged application. The EBU specification for the blue emission of monitor tubes is given, for example as the range bounded by the colour coordinates (x;y): (0.158; 0.060), (0.150; 0.053), (0.143; 0.061) and (0.154; 0.072). In the second place the material should not only have a low saturation but also a low temperature quenching, that is to say that the efficiency does not decrease or decreases only to a slight extent) upon an increase of the temperature which occurs at a high load. Furthermore the material is required to exhibit a low degradation, which means that the efficiency decreases only to a small extent during the lifetime of the tube. Finally, the material is required to be resistant during its application, that is to say, the material should not lose its good properties during manufacture of the luminescent screen and the cathode ray tube.

Several materials activated by trivalent thulium have already been proposed for the blue-luminescing material in projection television tubes. The narrow-line emission of $Tm^{3+}$ has the advantage for projection television that less stringent requirements are imposed on the optics of the system than in the case of the broader band emission of ZnS-Ag. However, all of the proposed Tm-activated materials have one or more drawbacks so that they do not qualify for practical applications. $Tm^{3+}$- activated ZnS, likewise as ZnS-Ag, has a strong saturation. $La_2O_2S$-Tm is thermally quenched to a great extent. LaOCl-Tm saturates and particularly due to its hygroscopic properties it is not resistant to application. The $LaGaO_3$-Tm stated in the opening paragraph is not satisfactorily usable because its efficiency is too low and because it is very difficult to prepare the material in such a way that good luminescence properties are obtained.

It is an object of the invention to provide novel blue-luminescing materials which are suitable for high loads, particularly upon electron excitation.

According to the invention a luminescent lanthanum gallate having the perovskite structure and activated by trivalent thulium is characterized in that the gallate comprises aluminium and is defined by the formula $La_{1-x}Tm_xGa_{1-y}Al_yO_3$ in which up to 20 mol.% of the La may be replaced by Y, Gd, Lu and/or Sc and in which $10^{-4}$ x 0.05 and 0.20 y 0.80.

Experiments which have led to the invention have surprisingly shown that a partial replacement of the gallium by aluminium in $LaGaO_3$-Tm leads to luminescent materials which, compared with the pure $LaGaO_3$, have a considerably higher efficiency and a substantially uniform spectral distribution of the emitted light. Furthermore, it has been found that the gallates comprising aluminium can be obtained in a simpler way with a high efficiency than the pure gallates. The said effects of the partial replacement of the gallium were not to be expected at all because $Tm^{3+}$-activated, pure lanthanum aluminate (LaAlO$_3$-Tm) which is known as a luminescent material does not qualify at all for practical uses. In fact, LaAlO$_3$-Tm

exhibits a strong thermal quenching and has an unsuitable colour point of the emitted radiation. The latter is due to the relatively high contribution of the emission of $Tm^{3+}$ at approximately 520 nm in $LaAlO_3$ in addition to the main emission at approximately 460 nm.

In order to combine the advantages of $LaAlO_3$ (easy preparation, high efficiency) and those of $LaGaO_3$ - (good colour point, low saturation, low temperature quenching, low degradation and good resistance to application) without experiencing their drawbacks, the Al-content y is to be chosen in the above-mentioned range of 0.20 y 0.80. In fact, experiments have proved that at values of y less than 0.20 the effect of the Al substitution is too small (because then too low efficiencies are obtained) and that at values of y of more than 0.80 a too large thermal quenching and an undesired colour point are obtained. Upon substitution of Ga by Al the perovskite crystal structure is maintained. This is also the case if small quantities of La are replaced by one or more of the elements Y, Gd, Lu and Sc. Such a substitution is admissible up to at most 20 mol.% in the luminescent gallates according to the invention because the luminescence properties then change to a slight extent. However, is more than 20 mol.% of the La is replaced, too low efficiencies are obtained. The Tm content x in the gallates according to the invention is chosen to be equal to at least $10^{-4}$ because at lower values of x a strong saturation occurs and also the luminous efficiency becomes too low. Furthermore x is chosen to be equal to at most 0.05 because at higher values too low efficiencies are found due to concentration quenching.

A luminescent lanthanum gallate according to the invention is preferred which is characterized in that up to at most 5 mol.% of the La may be replaced by Y, Gd, Lu and/or Sc and in that 0.001 x 0.02 and 0.30 y 0.70. In fact, it has been found that optimum results are obtained if no or only a very small substitution of the lanthanum is used and if the Tm and Al contents are chosen in the said ranges.

An advantageous embodiment of a luminescent lanthanum gallate according to the invention is characterized in that the gallate comprises up to 10 mol.% of Ga and/or Al in excess. Experiments have proved that the use of a small excess of Ga and/or Al (up to 10 mol.% with respect to the stoichiometric formula $La(Ga, Al)O_3$) has a favourable effect on the luminous efficiency of the luminescent material. Such a small excess if probably at least partly incorporated in the perovskite phase. An excess of, for example 5 mol.% in the gallate is not detectable by means of X-ray diffraction analyses. Quantities of Al and/or Ga of more than 10 mol.% give rise to too many subphases so that the luminous efficiency decreases, and they are therefore not used.

The invention also relates to a luminescent screen having a luminescent layer provided on a support, which layer comprises a luminescent lanthanum gallate according to the invention and to a cathode ray tube for displaying pictures, provided with such a lanthanum gallate or such a luminescent screen.

Examples of luminescent lanthanum gallates according to the invention will now be described in greater detail with reference to examples of preparation and measurements. An embodiment of a cathode ray tube is also described in greater detail with reference to the accompanying drawing in which

Fig. 1 shows diagrammatically and partly in a cross-section a cathode ray tube provided with a luminescent screen and

Fig. 2 shows the spectral energy distribution of the emission of a luminescent aluminium-comprising lanthanum gallate according to the invention.

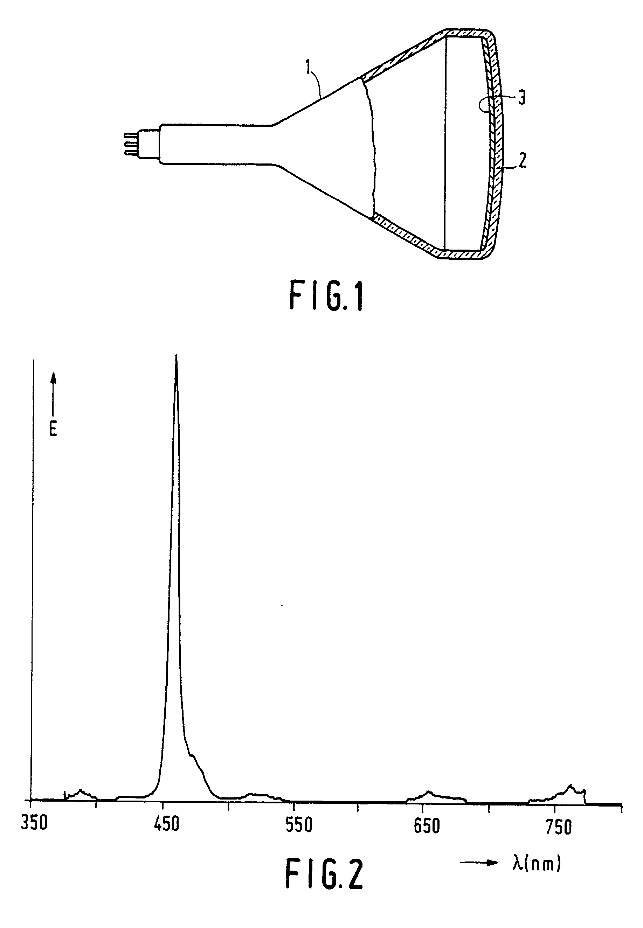

In Fig. 1 of the drawing the reference numeral 1 denotes the evacuated envelope of a cathode ray tube. The envelope 1 has a screen 2 constituting the support for the luminescent layer 3. The luminescent screen (2, 3) has a Tm-activated lanthanum gallate comprising aluminium. The screen may also comprise further luminescent materials, for example mixed with the lanthanum gallate.

Example 1 .

A mixture is made of the following aqueous solutions:
61.69 g of lanthanum nitrate solution (5,62 % by weight of La)
12.27 g of aluminium nitrate solution (2.91 % by weight of Al)
9.417 g of gallium nitrate solution (9.8 % by weight of Ga)
2.327 of thulium nitrate solution (1.83 % by weight of Tm).

This mixture is diluted with water to approximately 200 ml. Subsequently ammonia is added to a pH of approximately 9. The precipitate then obtained is dried and subsequently heated at 800°C in air for 1 hour. The product is then pulverised and subsequently fired in air at 1400°C for 1 hour. After cooling and pulverising, the product is ready for use. It satisfies the formula $La_{0.99}Tm_{0.01}Al_{0.5}Ga_{0.5}O_3$ and comprises Al and Ga (in oxide form) in excess in a quantity of a total of 5 mol.% (that is to say 0.025 $AlGaO_3$ excess per formula unit). Upon cathode ray excitation this gallate is found to exhibit the blue $Tm^{3+}$ emission. The

spectral energy distribution of this line emission at 460 nm is shown in Fig. 2. The wavelength $\lambda$ is plotted (in nm) on the horizontal axis and the radiation energy E per constant wavelength interval is plotted (in arbitrary units) on the vertical axis. The colour point of the emitted radiation was found to have the coordinates x = 0.151 and y = 0.046. Furthermore the luminous efficiency $\eta_L$ at a low load (loads smaller than $10^{-5}$ J.cm$^{-2}$ per pulse of the exciting electron beam), the saturation and the temperature quenching of this gallate were measured. For $\eta_L$ a value of 2.25 1m/W was found. At high loads of $1.10^{-2}$ and $2.10^{-2}$ J.cm$^{-2}$ per pulse the values of 1.65 and 1.25 1m/W respectively, were measured. The luminous efficiency measurements were performed at an acceleration voltage of 20 kV. The known ZnS-Ag ($\eta_L$ = 13.6 1m/W) has a luminous efficiency of only 1.3 and 0.6 1m/W, respectively at the said high loads. Upon raising the temperature of the gallate, the luminous efficiency was found to be maintained satisfactorily: at 100$^\circ$C this efficiency was still 90% of the value at 20$^\circ$C. For the purpose of comparison it may be stated that the pure aluminate (La$_{0.99}$Tm$_{0.01}$AlO$_3$) at 100$^\circ$C only has approximately 35% of the efficiency at 20$^\circ$C. When using the gallate in the screen of a cathode ray tube it was found to exhibit only a small degradation. After an operating time in which the screen had consumed 25 C.cm$^{-2}$ the efficiency was found to be still approximately 86% of the initial value. After 50, 75 and 100 C.cm$^{-2}$ values of 81, 75 and 73%, respectively of the initial value were found. For the known Ag-activated zinc sulphides there is a large spread in the maintenance percentages: values of 35-70% after 100 C.cm$^{-2}$.

Examples 2 to 4 .

In order to check the influence of deviations from the stoichiometric compound, the three gallates were prepared analogously as described in Example 1 (all with a molar ratio Al:Ga of 1 and a Tm content of 0.002). However, the stoichiometric quantity of the elements was used in Example 2, an excess of 5 Mol.% of Ga + Al was used in Example 3 and an excess of 5 Mol.% of La (therefore a deficinecy of Ga + Al) was used in Example 4. The measurement of the luminous efficiency proves that an excess of Al + Ga is advantageous and that a deficiency of these elements is to be preferably avoided:

Example 2: $\eta_L$ = 2.40 1m/W

Example 3: $\eta_L$ = 2.56 1m/W

Example 4: $\eta_L$ = 1.19 1m/W.

Examples 5 to 11

Analogously as described in Example 1, a number of gallates defined by the formula La$_{1-x}$Tm$_x$Al$_{0.5}$Ga$_{0.5}$O$_3$ was prepared using an excess of 5 mol.% of Ga + Al. The Tm content x was varied. The results of the measurement of the luminous efficiency $\eta_L$ (1m/W) are summarized in the following Table.

| Example | x | $\eta_L$ (in 1m/W) |
|---|---|---|
| 5 | 0.0001 | 1.46 |
| 6 | 0.0005 | 2.87 |
| 7 | 0.001 | 2.82 |
| 8 | 0.002 | 2.79 |
| 9 | 0.005 | 2.59 |
| 10 | 0.01 | 2.13 |
| 11 | 0.03 | 0.98 |

Examples 12 to 14 .

The influence of the substitution of Al for Ga was checked with reference to three gallates defined by the formula La$_{0.988}$Tm$_{0.002}$Ga$_{1-p}$Al$_p$O$_3$ which were prepared in the manner as described in Example 1 and in which each time an excessof 5 Mol.% of Ga + Al was used. For the purpose of comparison also the pure gallate (p = 0, Example a) and the pure aluminate (p = 1, Example b) were prepared. The results of the measurement of luminous efficiency $\eta_L$ (in 1m/W) and colour point (x,y) are given in the following Table. These measurements show that the pure gallate (Example a) has only a small luminous efficiency and that the pure aluminate (Example b) has an unsuitable colour point (the y-coordinate has a too high value).

| Example | p | $\eta_L$(1m/W) | x | y |
|---------|------|---------------|-------|-------|
| a | 0 | 1.76 | 0.150 | 0.050 |
| 12 | 0.25 | 2.25 | 0.150 | 0.046 |
| 13 | 0.50 | 2.64 | 0.151 | 0.050 |
| 14 | 0.75 | 2.71 | 0.150 | 0.061 |
| b | 1 | 3.35 | 0.150 | 0.088 |

Examples 15 to 21 .

Again a series of gallates having different Al contents and with an excess of 5 mol.% of Al + Ga was prepared by means of a method as described in Example 1. The Tm content was now 0.01: $La_{0.99}Tm_{0.01}Ga_{1-p}Al_pO_3$ The measurements of $\eta_L$ and the colour point (x,y) are shown in the following Table.

| Example | p | $\eta_L$(1m/W) | x | y |
|---------|------|---------------|-------|-------|
| 15 | 0.2 | 2.65 | 0.152 | 0.042 |
| 16 | 0.3 | 1.78 | 0.154 | 0.046 |
| 17 | 0.4 | 1.66 | 0.155 | 0.048 |
| 18 | 0.5 | 2.13 | 0.151 | 0.046 |
| 19 | 0.6 | 1.54 | 0.154 | 0.050 |
| 20 | 0.7 | 1.65 | 0.153 | 0.054 |
| 21 | 0.8 | 2.02 | 0.152 | 0.062 |

Examples 22 to 30 .

Small substitutions (up to 20 mol.%at a maximum) of the lanthanum by elements such as Y, Ga, Lu and/or Sc in the aluminium-comprising lanthanum gallates influence the luminescence properties to a slight extent only. This is apparent from the following Examples of such gallates all of which comprise 0.005 Tm and have been prepared in the same manner as described in Example 1 using an excess of 5 mol.% of Al + Ga. For each Example the Table below shows the formula of the fundamental lattic and also the luminous efficiency $\eta_L$ and the colour point (x,y).

5

| Example | Formula | $\eta_L$ (lm/W) | x | y |
|---------|---------|-----------------|-----|-----|
| 22 | $La_{0.99}Y_{0.01}Ga_{0.5}Al_{0.5}O_3$ | 2.04 | 0.153 | 0.047 |
| 23 | $La_{0.97}Y_{0.03}Ga_{0.5}Al_{0.5}O_3$ | 2.10 | 0.153 | 0.048 |
| 24 | $La_{0.9}Y_{0.1}Ga_{0.5}Al_{0.5}O_3$ | 1.67 | 0.153 | 0.049 |
| 25 | $La_{0.99}Lu_{0.01}Ga_{0.5}Al_{0.5}O_3$ | 2.34 | 0.153 | 0.048 |
| 26 | $La_{0.97}Lu_{0.03}Ga_{0.5}Al_{0.5}O_3$ | 2.22 | 0.153 | 0.048 |
| 27 | $La_{0.9}Lu_{0.1}Ga_{0.5}Al_{0.5}O_3$ | 1.59 | 0.153 | 0.049 |
| 28 | $La_{0.99}Gd_{0.01}Ga_{0.5}Al_{0.5}O_3$ | 2.01 | 0.152 | 0.044 |
| 29 | $La_{0.97}Gd_{0.03}Ga_{0.5}Al_{0.5}O_3$ | 1.85 | 0.152 | 0.043 |
| 30 | $La_{0.9}Gd_{0.1}Ga_{0.5}Al_{0.5}O_3$ | 1.83 | 0.154 | 0.042 |

Examples 31 to 35 .

In a manner analogous to that described in Example 1, five luminescent lanthanum gallates were obtained which were defined by the formula $La_{1-x}Tm_xGa_{0.5}Al_{0.5}O_3$ with different Tm contents x and in which an excess of 5 mol.% of Al + Ga was used. The luminous efficiency $\eta_L$ of these gallates was measured at a low load ($10^{-5}$ J/cm$^{-2}$ per pulse) in a cathode ray tube. Furthermore the luminous efficiencies were measured at high loads, namely $10^{-2}$ J.cm$^{-2}$ per pulse and $2.10^{-2}$ J.cm$^{-2}$p.pulse in order to determine the saturation of these gallates. The following Table summarizes the results of these measurements. For the measurements of the luminous efficiency at high loads this Table states between brackets the value of the luminous efficiency in % with respect to the luminous efficiency at $10^{-5}$ J.cm$^{-2}$ per pulse. The results of these measurements for the known ZnS-Ag are mentioned under Example c for the purpose of comparison.

| Example | x | $\eta_L$ (lm/W at pulse strength) | | |
|---------|-----|-----|-----|-----|
| | | $10^{-5}$ J.cm$^{-2}$ | $10^{-2}$ J.cm$^{-2}$ | $2.10^{-2}$ J.cm$^{-2}$ |
| 31 | 0.002 | 2.85 | 0.95 (33) | 0.50 (18) |
| 32 | 0.005 | 2.65 | 1.35 (51) | 0.80 (30) |
| 33 | 0.01 | 2.25 | 1.65 (73) | 1.25 (56) |
| 34 | 0.02 | 1.40 | 1.15 (82) | 0.95 (68) |
| 35 | 0.03 | 1.00 | 0.75 (75) | 0.60 (60) |
| c | - | 13.6 | 1.3 (10) | 0.6 (4.5) |

It is to be noted that the luminescent lanthanum gallates according to the invention also luminesce efficiently upon excitation by X-ray radiation.

**Claims**

1. A luminescent lanthanum gallate having the perovskite structure and activated by trivalent thulium, characterized in that the gallate comprises aluminium and is defined by the formula $La_{1-x}Tm_xGa_{1-v}Al_vO_3$

6

in which up to 20 mol.% of the lanthanum may be replaced by yttrium, gadolinium, lutetium and/or scandium and in which $10^{-4} \leq x \leq 0.05$ and $0.20 \leq y \leq 0.80$.

2. A luminescent lanthanum gallate as claimed in Claim 1, characterized in that up to at most 5 mol.% of the La may be replaced by Y, Gd, Lu and/or Sc and in that $0.001 \leq x \leq 0.02$ and $0.30 \leq y \leq 0.70$.

3. A luminescent lanthanum gallate as claimed in Claim 1 or 2, characterized in that the gallate comprises up to 10 mol.% of Ga and/or Al in excess.

4. A luminescent screen having a luminescent layer provided on a support, comprising a luminescent lanthanum gallate as claimed in Claim 1, 2 or 3.

5. A cathode ray tube for displaying pictures, provided with a luminescent lanthanum gallate as claimed in Claims 1, 2 or 3, or with a luminescent screen as claimed in Claim 4.


## Revendications

1. Gallate de lanthane luminescent activé à l'aide de thulium et présentant la structure de pérovskite, caractérisé en ce que le gallate contient de l'aluminium et est défini par la formule $La_{1-x}Tm_xGa_{1-y}Al_yO_3$ dans laquelle jusqu'à 20% en moles du La peut être remplacé par de l'yttrium, du gadolinium, du lutétium et/ou du scandium et dans laquelle $10^{-4} \leq x \leq 0,05$ et $0,20 \leq y \leq 0,80$.

2. Gallate de lanthane luminescent selon la revendication 1, caractérisé en ce que jusqu'à 5% en moles du La peut être remplacé par Y, Gd, Lu et/ou Sc et en ce que $0,001 \leq x \leq 0,02$ et $0,30 \leq y \leq 0,70$.

3. Gallate de lanthane luminescent selon la revendication 1 ou 2, caractérisé en ce que le gallate contient jusqu'à 10% en moles de Ga et/ou de Al en excès.

4. Ecran luminescent présentant une couche luminescente appliquée sur un support et contenant un gallate de lanthane luminescent selon la revendication 1, 2 ou 3.

5. Tube à rayons cathodiques pour la reproduction d'images muni d'un gallate de lanthane luminescent selon les revendications 1, 2 ou 3, ou d'un écran luminescent selon la revendication 4.


## Ansprüche

1. Leuchtendes Lanthangallat mit Perowskit-Struktur, das durch dreiwertiges Thulium aktiviert wird, dadurch gekennzeichnet, daß das Gallat Aluminium enthält und durch die Formel $La_{1-x}Tm_xGa_{1-y}Al_yO_3$ bestimmt wird, wobei bis zu 20 Mol% des Lanthans durch Yttrium, Gadolinium, Luthetium und/oder Scandium ersetzt sein kann, und worin $10^{-4} \leq x \leq 0,05$ und $0,20 \leq y \leq 0,80$ sind.

2. Leuchtendes Lanthangallat nach Anspruch 1, dadurch gekennzeichnet, daß bis zu höchstens 5 Mol% La durch Y, Gd, Lu und/oder Sc ersetzt sein kann, und daß $0,001 \leq x \leq 0,02$ und $0,30 \leq y \leq 0,70$ sind.

3. Leuchtendes Lanthangallat nach Anspruch 1 oder 2, dadurch gekennzeichnet, daß das Gallat bis zu 10 Mol% Ga und/oder Al im Überschuß enthält.

4. Leuchtschirm mit einer Leuchtstoffschicht auf einem Träger mit einem leuchtenden Lanthangallat nach Anspruch 1, 2 oder 3.

5. Kathodenstrahlröhre zur Bildwiedergabe mit einem leuchtenden Lanthangallat nach Anspruch 1, 2 oder 3, oder mit einem Leuchtschirm nach Anspruch 4.

FIG.1

FIG.2